# EUROPEAN PATENT SPECIFICATION

(11) **EP 2 199 601 B1**
(45) Date of publication and mention of the grant of the patent: **06.11.2013**
(21) Application number: 08021993.4
(22) Date of filing: 18.12.2008
(51) Int. Cl.: E02B 9/08, F03B 13/26, F03B 17/06

(54) **A method of deployment of hydroelectric turbine with aligning means**
Verfahren zur Installation einer hydroelektrischen Turbine mit Ausrichtungsmitteln
Un procédé de déploiement d'une turbine hydraulique avec moyens d'alignement

(43) Date of publication of application: 23.06.2010
(73) Proprietor: OpenHydro IP Limited, Dublin 2 (IE)
(72) Inventor: Ives, James, Dublin 2 (IE); Dunne, Paul, Drumcondra Dublin 9 (IE)
(74) Representative: O'Neill, Brian

(56) References cited:
- EP-A- 1 980 670
- EP-A- 1 980 746
- WO-A-00/77393
- WO-A-03/046375
- GB-A- 204 505
- GB-A- 2 447 514
- JP-A- 63 055 370

## Description

### Field of the invention

The present invention relates to a hydroelectric turbine system, in particular a system comprising a hydroelectric turbine mounted on a base, the system including means to stabilising and/or orient the system while being lowered, during a running tide, towards a deployment site on the seabed.

### Background of the invention

Currently, and at a global scale, there is great concern surrounding the damage that the emission of CO₂ is causing to our environment, in particular the threat posed by global warming. One of the major sources of CO₂ emission is in the production of electricity, on a large scale, through the burning of fossil fuels. Electricity is however a commodity that has become essential to the survival of the human race, and there are thus vast resources currently being expended in seeking alternative means of generating large quantities of electricity without the use of fossil fuel. While nuclear energy is one such alternative, most societies are uncomfortable with the negative aspects of nuclear power and thus other more desirable solutions are required.

Renewable energy has thus come to the fore in recent years, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. These conditions are significantly inhospitable, and are not conducive to safe working conditions. The installation of a base on which such tidal turbines are mounted has conventionally taken the form of the sinking of a pile into the seabed, on which pile a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation.

EP 1980746 A1 discloses a method of installing a hydroelectric turbine, where the orientation in the tidal flow is achieved by a tub or an anchor.

### Summary of the invention

According to the present invention there is provided a method of deploying, in a running tide, a hydroelectric turbine system, the method comprising the steps as claimed in the claim 1, the steps being
positioning a deployment vessel and the system above a deployment site;
lowering the system from the vessel towards the deployment site;
utilising the tidal flow of water past the system to achieve and/or maintain a desired orientation of the system with respect to the tidal flow.

Preferably, the method comprises utilising the tidal flow of water past the system to effect and/or maintain stability of the system in the tidal flow.

Preferably, the method comprises, in the step of lowering the system, utilising lowering means which permit the system to be displaced into a desired orientation, relative to the direction of the tidal flow, under the influence of the flow of water moving past the system.

Preferably, the method comprises allowing the tidal flow to flow past aligning means on the system such as to effect displacement of the system in order to stabilise and/or orient the system with respect to the tidal flow.

Preferably, the system comprises a base and a hydroelectric turbine mountable on the base, the method comprising the step of securing the turbine to the base prior to lowering the system towards the seabed.

Preferably, the method comprises utilising the tidal flow to orient the system such that the turbine is operatively aligned with the direction of the tidal flow.

### Brief description of the drawings

Figure 1 illustrates a perspective view of a first embodiment of a hydroelectric turbine system according to the present invention;
Figure 2 illustrates an alternative arrangement of a portion of the hydroelectric turbine system shown in Figure 1;
Figure 3 illustrates a perspective view of a second embodiment of a hydroelectric turbine system according to the present invention; and
Figure 4 illustrates a perspective view of a portion of a hydroelectric turbine system according to a third embodiment of the invention.

### Detailed description of the drawings

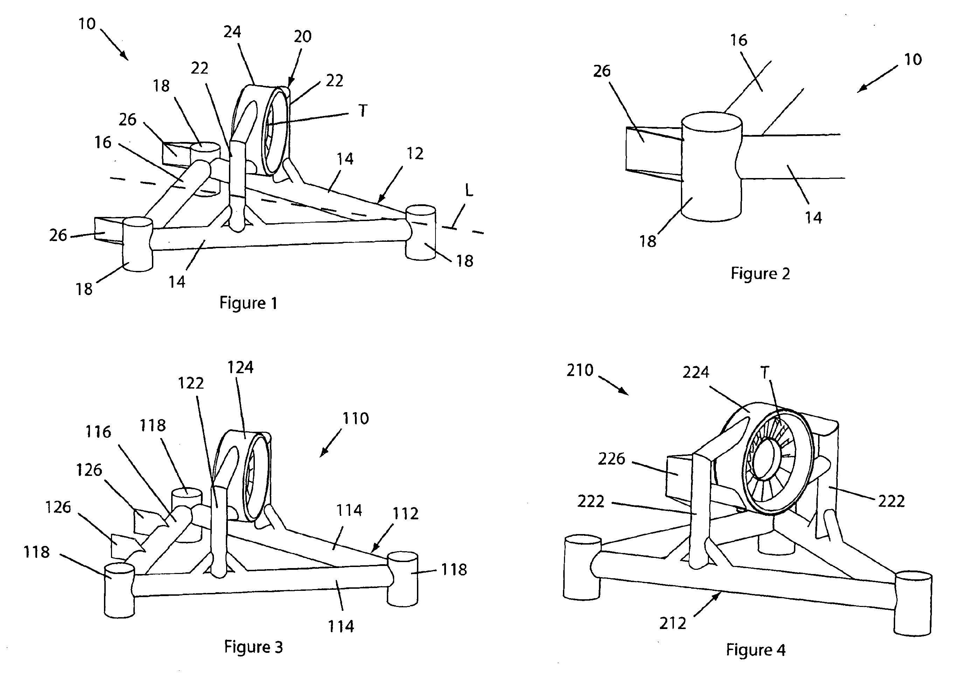

Referring now to Figure 1 of the accompanying drawings, there is illustrated a first embodiment of a hydroelectric turbine system according to the present invention, generally indicated as 10, which is designed to be located on the seabed in an area of high tidal flow, in order to effect the hydroelectric generation of electricity. The system 10 comprises a base 12 which is adapted to carry a hydroelectric turbine T thereon, which turbine T may then form part of the system 10. In the embodiment illustrated the base 12 is triangular in plan, although it will be appreciated from the following description of the operation of the system 10 that the shape of the base 12 is not limited to being triangular, and may be of any other suitable form. It will also be appreciated that the hydroelectric turbine T to be mounted on the base 12 may be of any suitable form.

The base 12 comprises a pair of lateral beams 14 extending between which is a rear beam 16, each apex of the base 12 being defined by a foot 18, between which the beams 14, 16 extend. The feet 18 may be suitably designed to be fixed to the seabed in any number of arrangements. The base 12 may be made of any suitable material or combination of materials, and in the embodiment illustrated is formed primarily of tubular steel. The base 12 may be modular in nature in order to allow repair and/or replacement of individual components thereof.

The system 10 further comprises a mount 20 secured to the base 12, and which is adapted to receive and retain the hydroelectric turbine T therein. The mount includes a pair of uprights 22, each of which extends from a respective one of the lateral beams 14, and a split collar 24 supported on the uprights 22. The collar 24 is substantially cylindrical in shape, and in use receives the hydroelectric turbine therein, which may be secured to the collar 24 via a stator (not shown) of the turbine. Again it will be appreciated that the design of the mount 20 is merely one example of a mechanism for securing a turbine to the base 12, and the mount 20 may be of any other suitable form. In the embodiment illustrated the system 10 is designed such that when mounted on the seabed, a longitudinal axis L of the base 12 should be substantially aligned with the direction of tidal flow at the deployment site. The mount 20 is therefore oriented in order to face the hydroelectric turbine directly into the direction of tidal flow, with the base 12 located on the seabed.

The system 10 is intended to be lowered to the seabed from a barge or similar deployment vessel (not shown), for example using a number of lowering lines connected to the base 12 and lowered via winches from the deployment vessel. As mentioned above, the areas in which the system 10 will be deployed will be areas of high tidal flow, which embody difficult working conditions both on and below the surface of the sea. Lowering an object from a vessel towards the seabed in such high tidal flows is extremely difficult, and will generally result in undesired movement such as spinning/oscillation of the object. This can result in tangling of the lines being used to lower the object, and, in the case of a hydroelectric turbine, which must be accurately aligned with the tidal flow, can make it extremely difficult to correctly orient the turbine with respect to the direction of tidal flow, when positioning the turbine onto the seabed.

The system 10 of the present invention overcomes the above-mentioned problems by providing aligning means in the form of a pair of fins 26 mounted to the base 12, and in particular extending rearwardly from the feet 18 mounted on either of the rear beam 16. In the embodiment illustrated the fins 26 are substantially aligned with the longitudinal axis L of the base 12. Once lowered into the tidal flow, the fins 26 act as rudders providing stability to the base 12 and also effecting alignment of the base 12 with respect to the tidal flow, forcing rotation of the base 12 until the longitudinal axis L is substantially parallel with the direction of tidal flow. It will of course be understood that the orientation of the fins 26 may be varied in order to achieve a desired orientation of the base 12 with respect to the direction of tidal flow.

In the embodiment illustrated the system 10 is intended to be lowered to the seabed from the deployment vessel with the rear beam 16 defining a trailing edge of the system 10. This means that the forward tip of the triangular plan of the base 12 points into the tidal flow, with the pair of fins 26 trailing from the rear. In this position the pair of fins 26 are at their most effective, both in terms of stabilising and orienting the system 10 in the tidal flow. The fins 26 could of course be positioned at any other location, or supplemented with additional fins (not shown) located around the base 12.

The system 10 of the present invention therefore utilises the kinetic energy of the tidal flow in order to both stabilise and correctly orient the system 10 as it is lowered from a deployment vessel towards the seabed. The aligning means, in the form of the pair of fins 26, may therefore be passive as they utilise this kinetic energy of the tidal flow as a source of power to provide the above mentioned functionality. It will be appreciated that active aligning means (not shown) could be utilised, for example in the form of one or more propellers, water jets, etc., in order to effect the stabilisation and orientation of the system 10 when being lowered in a tidal flow. However, this would add to both the cost and complexity of the system 10, and given the harsh underwater conditions in which the system 10 will reside for extended periods, the reliability of such active aligning means could be an issue. The passive fins 26 are a simple yet highly effective aligning means for the system 10.

Turning now to Figure 2, the rear corner of the base 12 is shown, in which the fin 26 is shown mounted in a slightly different position, whereby a gap is left between the upper edge of the fin 26 and the top of the foot 18. This is to prevent the fin 26 from piercing or otherwise damaging the barge or similar deployment vessel (not shown), used to deploy the system 10. The system 10 is intended to be towed to a particular deployment site suspended beneath the deployment vessel, and to be then lowered away from the underside of the deployment vessel towards the seabed. Thus, in particular given the relatively harsh conditions present at these deployment sites, it is possible that the system 10 may be lowered unevenly from beneath the barge, which could result in one or more of the fins 26 contacting the underside of the barge. By lowering the fins 26 slightly beneath the upper edge of the feet 18, such an occurrence is rendered extremely unlikely.

Referring now to Figure 3, there is illustrated a second embodiment of a hydroelectric turbine system according to the present invention, generally indicated as 110. In this second embodiment like components have been accorded like reference numerals, and unless otherwise stated perform a like function. The system 110 comprises a base 112 which is formed from a pair of lateral beams 114 connected between which is a rear beam 116. Each apex of the base 112 is defined by a foot 118. Although not illustrated, in use the system 110 would be provided with a mount for securing a hydroelectric turbine T to the base 112 to form part of the system 110.

The system 110 further comprises aligning means in the form of a pair of fins 126 which are mounted on the rear beam 116, and which project upwardly and rearwardly from the rear beam 116. In use the tidal flow of water past the fins 126 will be cleaner or less turbulent than the flow past the fins 26 as positioned on the system 10 of the first embodiment. As a result the fins 126 of the second embodiment will be more effective in stabilising and orienting the system 110 with respect to the direction of tidal flow.

Referring to Figure 4, there is illustrated a third embodiment of a hydroelectric turbine system, generally indicated as 210. In this third embodiment like components have again been accorded like reference numerals, and unless otherwise stated perform a like function. Figure 4 shows only a portion of the alternative embodiment, and in particular shows a mount 220 to which a hydroelectric turbine T is secured, similar to the arrangement of the first embodiment described above.

The mount 220 comprises a pair of uprights 222 and collar 224 into which the turbine T is seated. The system 210 further comprises aligning means in the form of a pair of fins 226 which project from the pair of uprights 222. Again the tidal flow of water past this position of the system 210 may be less turbulent than the flow past and around the base 212 of the system 210.

It will of course be appreciated that the invention may be implemented by utilising a combination of the above mentioned positions for the aligning means. The aligning means may be located at any other suitable location, and may be of any other suitable form, once capable of stabilising and/or orienting the system when suspended, or being lowered/raised, in a tidal flow.

It will thus be appreciated that the system 10, 110, 210 of the present invention, and the method of deploying a hydroelectric turbine system according to the invention, greatly simplifies the deployment of a hydroelectric turbine onto the seabed. This is achieved by stabilising the system as it is lowered towards the seabed and conversely when the system is being raised from the seabed, for example, for repair or replacement. The system and method of the invention avoid tangling of lowering lines, and ensure that the system is correctly oriented when it reaches the seabed, thereby avoiding the need for further positioning at that stage. In addition, as the system and method of the invention are designed to allow deployment during a running tide, as opposed to during slack water, the time allowed for a deployment or recovery of the system is greatly increased.

## Claims

1. A method of deploying, in a running tide, a hydroelectric turbine system(10), the method comprising the steps of;
positioning a deployment vessel and the system above a deployment site;
lowering the system from the vessel towards the deployment site;
utilising the tidal flow of water past the system to achieve and/or maintain a desired orientation of the system with respect to the tidal flow
**characterised by** allowing the tidal flow to flow past aligning means in the form of a pair of fins(26) mounted to a base(12) of the system such as to effect displacement of the system in order to orient and/or stabilize the system with respect to the tidal flow.

2. A method according to claim 1 comprising utilising the tidal flow of water past the system to effect and/or maintain stability of the system in the tidal flow.

3. A method according to claim 1 or 2 comprising, in the step of lowering the system, utilising lowering means which permit the system to be displaced into a desired orientation, relative to the direction of the tidal flow, under the influence of the flow of water moving past the system.

4. A method according to any of claims 1 to 3 in which the system comprises a hydroelectric turbine (T) mountable on the base, the method comprising the step of securing the turbine to the base prior to lowering the system towards the seabed.

5. A method according to claim 4 comprising utilising the tidal flow to orient the system such that the turbine is operatively aligned with the direction of the tidal flow.

## Patentansprüche

1. Verfahren zum Installieren eines hydroelektrischen Turbinensystems (10) in einem laufenden Gezeitenstrom, wobei das Verfahren folgende Schritte umfasst:
Positionieren eines Installationsschiffs und des Systems über einem Installationsort;
Absenken des Systems von dem Schiff zu dem Installationsort;
Nutzen der Gezeitenströmung von Wasser an dem System vorbei, um eine gewünschte Orientierung des Systems in Bezug auf die Gezeitenströmung zu erreichen und/oder aufrechtzuerhalten,
**gekennzeichnet durch** das Zulassen, dass die Gezeitenströmung an Ausrichtungsmitteln in Form eines Paars von an einem Sockel (12) des Systems angebrachten Finnen (26) vorbeiströmt, so dass die Verschiebung des Systems bewirkt wird, um das System in Bezug auf die Gezeitenströmung zu orientieren und/oder zu stabilisieren.

2. Verfahren nach Anspruch 1, umfassend das Nutzen der Gezeitenströmung von Wasser an dem System vorbei, um die Stabilität des Systems in der Gezeitenströmung zu bewirken und/oder aufrechtzuerhalten.

3. Verfahren nach Anspruch 1 oder 2, umfassend, im Schritt des Absenkens des Systems, das Nutzen von Absenkmitteln, die zulassen, dass das System unter dem Einfluss der Strömung von sich an dem System vorbei bewegendem Wasser in eine gewünschte Orientierung relativ zur Richtung der Gezeitenströmung verschoben wird.

4. Verfahren nach einem der Ansprüche 1 bis 3, wobei das System eine auf dem Sockel anbringbare hydroelektrische Turbine (T) umfasst, wobei das Verfahren den Schritt des Befestigens der Turbine an dem Sockel vor dem Absenken des Systems zum Meeresboden umfasst.

5. Verfahren nach Anspruch 4, umfassend das Nutzen der Gezeitenströmung, um das System derart zu orientieren, dass die Turbine wirksam mit der Richtung der Gezeitenströmung ausgerichtet ist.

## Revendications

1. Procédé de déploiement, lors d'une marée en cours, d'un système de turbine hydroélectrique (10), le procédé comportant les étapes consistant à :
positionner un navire de déploiement et le système au-dessus d'un site de déploiement ;
abaisser le système depuis le navire vers le site de déploiement ;
utiliser le courant de marée de l'eau devant le système pour obtenir et/ou maintenir une orientation souhaitée du système par rapport au courant de marée
**caractérisé en ce qu'**il laisse le courant de marée s'écouler devant des moyens d'alignement sous la forme d'une paire d'ailettes (26) montées sur une base (12) du système de manière à effectuer un déplacement du système afin d'orienter et/ou de stabiliser le système par rapport au courant de marée.

2. Procédé selon la revendication 1, comportant l'étape consistant à utiliser le courant de marée de l'eau devant le système pour effectuer et/ou maintenir la stabilité du système dans le courant de marée.

3. Procédé selon la revendication 1 ou la revendication 2, comportant, au cours de l'étape consistant à abaisser le système, l'étape consistant à utiliser des moyens d'abaissement qui permettent au système d'être déplacé dans une orientation souhaitée, par rapport à la direction du courant de marée, sous l'influence du courant de l'eau se déplaçant devant le système.

4. Procédé selon l'une quelconque des revendications 1 à 3, dans lequel le système comporte une turbine hydroélectrique (T) en mesure d'être montée sur la base, le procédé comportant l'étape consistant à assujettir la turbine sur la base avant d'abaisser le système vers le fond marin.

5. Procédé selon la revendication 4, comportant l'étape consistant à utiliser le courant de marée pour orienter le système de telle sorte que la turbine est fonctionnellement alignée sur la direction du courant de marée.
